# FASCICULE DE BREVET EUROPEEN

(11) **EP 0 795 224 B1**
(45) Date de publication et mention de la délivrance du brevet: **15.03.2000**
(21) Numéro de dépôt: 95941135.6
(22) Date de dépôt: 23.11.1995
(51) Int. Cl.: H02J 11/00

(54) **SYSTEME D'ALIMENTATION D'AUXILIAIRES POUR STATION DE POMPAGE ALIMENTEE A DISTANCE**
VERSORGUNGSANLAGE FÜR DIE HILFSTROMKREISE EINER FERNGESPEISTEN PUMPSTATION
POWER SUPPLY SYSTEM FOR AUXILIARY EQUIPMENT IN A PUMPING STATION WITH A REMOTE POWER SUPPLY

(30) Priorité: 24.11.1994 FR 9414099
(43) Date de publication de la demande: 17.09.1997
(73) Titulaire: CEGELEC, 92300 Levallois Perret (FR)
(72) Inventeur: BAERD, Henri, F-77430 Champagne-sur-Seine (FR)
(74) Mandataire: Gosse, Michel
(86) Numéro de dépôt international: FR9501549
(87) Numéro de publication internationale: WO9616461

(56) Documents cités:
- DE-A- 2 425 686
- FR-A- 2 230 141
- FR-A- 2 506 969
- FR-A- 2 542 522
- FR-A- 2 699 016
- GB-A- 2 190 551
- 'Encyclopedia of Science and Technology', 1977, vol.14, pages 416-418, MC GRAW-HILL BOOK COMPANY, US

## Description

La présente invention concerne un système d'alimentation d'auxiliaires pour station de pompage alimentée à distance.

Dans l'exploitation des puits de pétrole sous-marins il est établi qu'il est souhaitable d'équiper chaque puits d'une station de pompage. Cette station doit être sous-marine. Il est souhaitable de l'alimenter à distance, éventuellement du rivage. Cela nécessite d'alimenter la station de pompage par un câble de puissance, à partir d'un générateur d'alimentation. Le moteur de la pompe étant un moteur à induction, il sera directement alimenté par un générateur d'alimentation lui fournissant un courant alternatif triphasé à fréquence variable, au travers d'un système de câble comprenant essentiellement un câble de puissance à trois conducteurs. Pour fixer les idées, le groupe motopompe peut consommer jusqu'à 2 500 kW, soit 3500 KVA, soit encore 300 A environ sous 6,6 kV, avec une fréquence de 100 Hz. Toutefois, on envisage déjà des applications à 6000 kW.

Un transformateur élévateur de tension et un transformateur abaisseur de tension peuvent être respectivement insérés aux deux extrémités du câble pour réduire les pertes.

Dans la station de pompage, à côté du groupe motopompe, on trouve divers auxiliaires dont des cartes électroniques, fonctionnant en courant continu et à faible puissance, ainsi que des vannes, ventilateurs ou pompes, fonctionnant en courant alternatif à puissance moyenne.

Cela nécessite d'alimenter de tels auxiliaires et d'échanger avec eux des signaux de commande et d'information.

La solution classique est d'ajouter un câble à cet effet, à côté du câble de puissance, ou d'incorporer à celui-ci des conducteurs additionnels.

Les documents FR-A-2 699 016, FR-A-2 506 969, FR-A-2 230 141 divulguent par ailleurs, dans différents domaines techniques, qu'il est possible d'éviter l'utilisation de conducteurs électriques additionnels pour alimenter des auxiliaires associés à une charge alimentée en courant alternatif. La solutions suggérée dans ces documents est d'utiliser un transformateur de courant dont le primaire est en série avec ladite charge pour alimenter les auxiliaires. Le document FR-A-2 699 016 suggère notamment de prévoir un tel transformateur de courant pour chaque phase. Les trois documents mentionnés indiquent que le courant au secondaire doit être redressé et régulé pour obtenir une alimentation continue satisfaisante pour les auxiliaires. En particulier, les documents FR-A-2 699 016 et FR-A-2 230 141 suggèrent de prévoir en cascade un redresseur et un limiteur de tension dérivant le courant fourni en excès par le secondaire.

Dans le cas d'une station de pompage alimentée à distance, le courant en excès peut être très important et les moyens de limitation classiques, tout comme celui d'ailleurs du document FR-A-2 230 141 conduisent à la dissipation de puissances excessives. Dans le document FR-A-2699016, la tension à la sortie des transformateurs de courant est limitée, avant redressement, au moyen de thyristors commandés agencés entre les phases. Cette multiplicité de commutateurs commandés est coûteuse et complexe.

La présente invention apporte une solution à ces problèmes.

Le système d'alimentation pour station de pompage alimentée à distance selon l'invention est défini dans la revendication 1.

Selon une caractéristique de l'invention, lesdits auxilaires sont des auxiliaires à courant continu qui sont connectés à la sortie dudit redresseur, en parallèle sur ledit limiteur de tension. Ainsi, le limiteur de tension régule la tension continue qui est fournie aux auxiliaires à courant continu.

Selon une autre caractéristique de l'invention une diode de découplage est prévue entre ledit commutateur de limitation et ledit condensateur, afin de préserver la charge dudit condensateur.

Selon une autre caractéristique de l'invention, lesdits auxiliaires sont des auxiliaires à courant alternatif qui sont connecté audit enroulement secondaire (par phase), en parallèle sur ledit redresseur. Le circuit limiteur de tension régule l'amplitude de cette tension, en dissipant dans une charge résistive tout excès de courant.

Selon une autre caractéristique de l'invention, ledit limiteur de tension est précédé d'un commutateur permettant de court-circuiter la sortie dudit redresseur, une diode de découplage étant prévue entre ce commutateur et ledit limiteur de tension.

Selon une autre caractéristique de l'invention, le système d'alimentation comprend au moins deux transformateurs connectés en série pour alimenter respectivement, d'une part, des auxiliaires à courant continu et, d'autre part, des auxiliaires à courant alternatif.

Selon un autre aspect de l'invention, il est également prévu un générateur d'alimentation pour le système d'alimentation d'auxiliaires que l'on vient de définir, caractérisé en ce qu'il comprend des moyens d'alimentation de repos pour maintenir un courant minimal d'alimentation lorsque la station de pompage est à l'arrêt.

Cela permet de maintenir un courant de repos, insuffisant pour animer la motopompe, mais qui permet de maintenir l'alimentation des auxiliaires.

Ce courant peut en outre servir à maintenir la température du moteur de la pompe grâce à l'énergie qu'il lui fournit.

Selon une autre caractéristique de l'invention, il est également prévu des moyens de relèvement d'alimentation de repos fournissant un courant temporairement accru pendant des périodes espacées, lorsque la station de pompage est au repos.

Ce courant accru fournit un excès d'énergie à la pompe, mais pendant peu de temps de sorte qu'elle peut le supporter, son élévation de température restant dans les limites prévues. La fréquence est alors telle que le groupe motopompe reste à l'arrêt. Le courant accru permet d'obtenir la tension nécessaire pour l'alimentation des auxiliaires à courant alternatif.

Les différents objets et caractéristiques de l'invention apparaîtront plus clairement dans la description suivante, donnée à titre d'exemple non limitatif, d'un exemple de mise en oeuvre de l'invention, en se référant aux figures annexées qui représentent :
- la figure 1, un diagramme général d'un système d'alimentation et de commande pour station de pompage alimentée à distance, employant le système d'alimentation d'auxiliaires de l'invention,
- la figure 2, un diagramme plus détaillé d'un mode de mise en oeuvre du système d'alimentation d'auxiliaires de l'invention prévu pour l'alimentation d'auxiliaires à courant continu.
- la figure 3, un diagramme plus détaillé d'un mode de mise en oeuvre du système d'alimentation d'auxiliaires de l'invention prévu pour l'alimentation d'auxiliaires à courant alternatif.

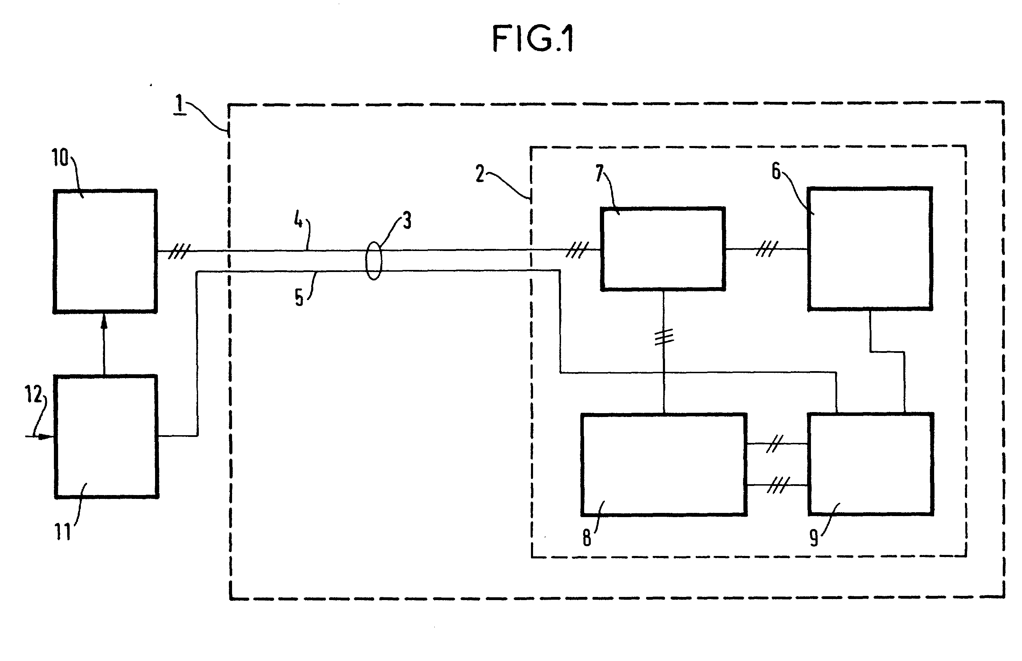

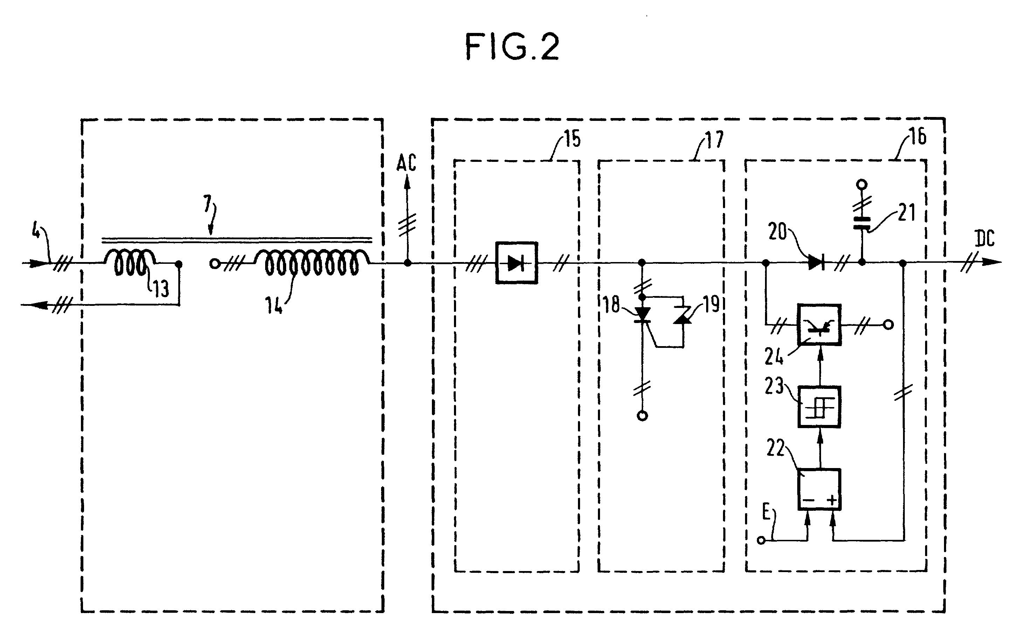

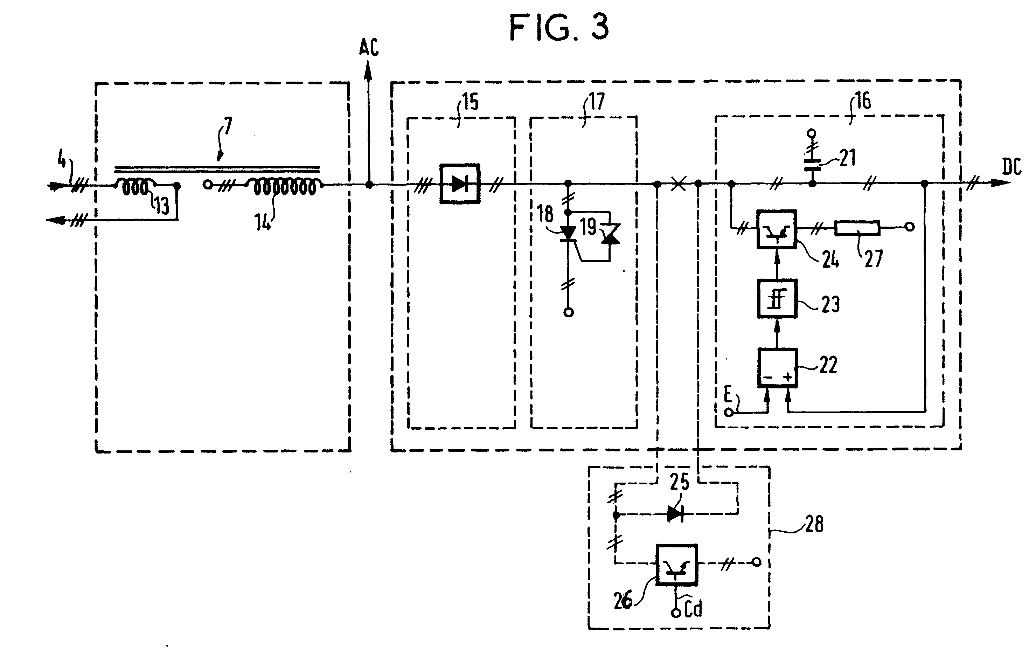

La figure 1 représente essentiellement la partie immergée 1 d'un système d'alimentation et de commande pour une station de pompage 2, à laquelle mène un câble 3 comprenant une ligne de puissance triphasée 4 et une fibre optique 5. Sur la ligne de puissance 3 est inséré, avant qu'elle atteigne un groupe motopompe 6, un transformateur de courant 7, qui extrait de la ligne un courant d'alimentation fourni à une unité d'alimentation d'auxiliaires 8, dont des modes de réalisation sont représentés aux figures 2 et 3, laquelle alimente des auxiliaires 9 couplés au groupe motopompe 6. Plusieurs transformateurs 7 sont éventuellement connectés en série dans la ligne de puissance, chacun associé à une unité d'alimentation 8 distincte, pour alimenter différents auxiliaires, comme on le verra par la suite.

A terre, le générateur d'alimentation de station de pompage 10 fournit sur la ligne de puissance 3 un courant d'une intensité et d'une fréquence propre à donner au groupe motopompe 6 un régime de marche désiré. Il est à cette fin commandé par une unité de commande et de contrôle 11 qui elle-même reçoit des ordres de marche 12. L'unité 11 communique par la fibre optique 5 avec les auxiliaires 9.

Elle en reçoit notamment des informations sur les conditions de marche du groupe motopompe 6, ce qui permet une commande en boucle de marche du groupe motopompe.

L'intérêt d'un tel système d'alimentation et de commande de station de pompage est de ne comprendre qu'un câble sous-marin de puissance à trois conducteurs et une fibre optique (ou plusieurs), ce qui est économique, particulièrement du fait que de tels câbles sont disponibles sur le marché pour d'autres applications.

L'utilisation d'un transformateur de courant inséré en série sur la ligne de puissance apporte une charge en série, limitée cependant, comme on va le voir, et dont il est automatiquement tenu compte dans le cadre d'une commande en boucle de la tension fournie au groupe motopompe. Cela ne pénalise donc pas l'alimentation du groupe motopompe.

On va maintenant examiner plus en détail, en se reportant à la figure 2, un premier mode de mise en oeuvre de l'invention, c'est-à-dire du système d'alimentation d'auxiliaires comprenant le transformateur de courant 7 et l'unité d'alimentation d'auxiliaires 8 de la figure 1, approprié à l'alimentation d'auxiliaires à courant continu.

La ligne de puissance triphasée y passe, avant d'atteindre le groupe motopompe 6 (figure 1) par un enroulement primaire 13 (pour chaque phase) d'un transformateur de courant 7. Un enroulement secondaire 14 (par phase) de ce transformateur de courant alimente un redresseur en pont 15 couplé à un limiteur de tension 16 par une ligne bifilaire, au travers duquel est alimentée une sortie DC à laquelle sont connectés des auxiliaires à courant continu, c'est-à-dire demandant une alimentation par une tension continue de valeur définie et consommant collectivement un certain courant continu que le système d'alimentation doit pouvoir fournir.

Entre le redresseur en pont 15 et le limiteur 16, un circuit de protection contre les surtensions 17 comprend essentiellement un redresseur commandé 18 commandé à travers une diode Zener 19 et débitant sur un court-circuit. La tension en sortie du redresseur en pont est ainsi limitée par l'amorçage de ce circuit de protection, en cas de surtension anormale, causée, par exemple, par une défaillance du groupe motopompe. Une fois le redresseur commandé 18 rendu conducteur, la tension fournie au limiteur de tension s'annule. Il faudra par la suite couper le courant sur le câble afin que le redresseur commandé se bloque et que la tension fournie au limiteur de tension se rétablisse.

Le limiteur de tension 16 comprend un redresseur 20 chargeant une capacité 21. La tension de charge de cette capacité est une tension régulée fournissant l'alimentation continue régulée DC ; elle est fournie à un comparateur de tension 22 recevant par ailleurs une tension de référence E et qui soustrait l'une de l'autre. La différence de ces tensions commande, par l'intermédiaire d'un circuit d'hystérésis 23, un commutateur 24. Lorsque la tension DC dépasse d'une valeur déterminée par l'hystérésis du circuit 23 la tension de référence E, le commutateur 24 dérive le courant fourni par le redresseur sur un court-circuit. La diode 20 se bloque. Le condensateur 21 maintient l'alimentation des auxiliaires, mais se décharge et la tension DC diminue. Lorsqu'elle atteint le seuil inférieur de l'hystérésis du circuit 23, le commutateur 24 s'ouvre à nouveau, le condensateur se recharge, et ainsi de suite.

De la sorte, lorsque le courant dans la ligne de puissance est suffisant, c'est-à-dire même lorsque le groupe motopompe est au repos, comme on le verra plus loin, le limiteur de tension 16 fonctionne et limite la tension fournie sur la sortie DC. La même tension vue à travers le redresseur 15 et le transformateur 7 est celle qui charge le circuit de puissance et que doit fournir le générateur 10. Elle est minime : quelques volts, et cela quel que soit le régime de marche de la motopompe.

Plus précisément, hors régime de pompage, le générateur 10 est agencé pour maintenir un courant minimal d'alimentation, de 30 A par exemple, la tension étant d'environ 60 V, au niveau de la station de pompage. Dans ces conditions, la tension aux bornes de sortie du redresseur en pont étant, par exemple, de 50 V, le circuit limiteur fournit environ 200 W, sous une tension qui oscille autour de la tension E, dans les limites de l'hystérésis du circuit 23. Le circuit de protection ne fonctionne pas.

En régime de pompage, l'alimentation continue régulée DC est assurée dans les conditions que l'on vient de décrire. Le commutateur de limitation 24 doit conduire tout le courant que fournit le redresseur 15, moins le courant consommé par les auxiliaires, mais en régime de court-circuit, de sorte que la puissance dissipée est minimale.

Au cas où le limiteur 16, et principalement le commutateur 24, risquerait la surcharge, le circuit de protection interviendrait, son thyristor 18 pouvant supporter des courants beaucoup plus élevés.

Un avantage de ce circuit est donc qu'il peut fonctionner avec des courants sur le câble variant dans de larges proportions, puisque la tension d'alimentation continue DC est limitée par un court-circuit, c'est-à-dire sans dissipation d'énergie.

On va maintenant se tourner vers la figure 3 qui représente un autre mode de mise en oeuvre de l'invention, approprié cette fois à l'alimentation d'auxiliaires à courant alternatif.

Dans cet exemple, dont la structure est généralement similaire à celle de l'unité de la figure 2, tous les composants fonctionnellement identiques ont conservé la même référence qu'à la figure 2. On voit ainsi que le transformateur 7, le redresseur 15, le module de protection 17, et le limitateur de tension 16 se retrouvent, inchangés, sauf en ce que, dans le limitateur de tension 16, la diode 20 est absente, tandis qu'une charge résistive 27 est ajoutée en série avec le commutateur de limitation 24. Par ailleurs, dans le cas où la liaison directe entre les modules 16 et 17 est rompue, un module optionnel 28 est fourni, comprenant une diode série 25, ainsi qu'un commutateur interrupteur 26, à commande Cd, pouvant dériver le courant de la sortie continue du redresseur 15 sur un court-circuit.

Les auxiliaires à courant alternatif à alimenter sont connectés à la sortie AC qui est la sortie triphasée de l'enroulement 14.

Le fonctionnement du transformateur 7, du redresseur 15, du circuit de protection 15, et du limiteur 16 sont ceux que l'on a décrit à propos de la figure 2, au dimensionnement près, comme le comprendra aisément l'homme de métier, à l'exception de ce qui est expliqué ci-après.

De la sorte, lorsque la charge du condensateur 21 n'atteint pas la tension de référence E, le limiteur de tension n'intervient pas et la tension alternative AC est celle que fournit l'enroulement 14. Lorsque la charge du condensateur 21 dépasse la tension de référence E du seuil d'hystérésis du circuit 23, le commutateur de limitation 24 devient passant, mais dérive le courant vers la charge résistive 27. L'effet est que la tension cesse de croître aux bornes du condensateur, à la sortie du redresseur et à la sortie de l'enroulement 14. Cela régule la tension alternative triphasée fournie sur la sortie AC. On comprend alors que la diode 20 de la figure 2 ne soit pas nécessaire.

Par rapport au mode de réalisation de la figure 2, on voit aisément que celui de la figure 3, tout en offrant les mêmes effets de limitation de la chute de tension série sur la ligne de puissance et de régulation de la tension fournie aux auxiliaires, impose cette fois une dissipation de puissance dans le commutateur de limitation 24 et dans la charge résistive 27.

Cela ne constitue pas un désavantage pour la raison suivante : les auxiliaires dont il s'agit, ventilateurs ou pompe d'un accumuleur de pression d'huile (pour le graissage de la motopompe) n'ont pas besoin de fonctionner en permanence lorsque le système d'alimentation est au repos, la motopompe étant arrêtée. Un fonctionnement intermittent est suffisant.

Pour faire face à ce besoin, il est donc prévu que le générateur 10 fournisse, par périodes (5 mn toutes les 10 mn, par exemple) un courant de 130 A et non plus de 30 A, la fréquence étant et restant relativement élevée, de sorte le groupe motopompe reste à l'arrêt. Sa température s'élève alors, mais la durée de la période et le rapport cyclique sont tels qu'elle reste dans les normes.

La tension de référence E est alors choisie telle que la régulation opère un peu au-dessous de cette valeur de courant, pour la tension qui résulte d'un courant de 120 A par exemple, alors que, compte tenu du rapport de transformation, la tension triphasée à la sortie de l'enroulement secondaire 14 et donc sur la sortie AC, est d'environ 400 V.

De cette façon, le courant à dériver par le limiteur de tension, et en particulier par le commutateur de limitation, dans les périodes où il atteindra son maximum (les 300 A mentionnés précédemment) sera bien moindre que celui que doit dériver le limiteur de tension de la figure 2. La puissance dissipée dans le commutateur 24 et la charge résistive 27 sera ainsi limitée, ce qui rend la solution économiquement viable.

Il reste à considérer le cas où le module optionnel 28 est fourni. Il comprend essentiellement un commutateur interrupteur 26, lequel, sous l'effet de la commande Cd (qui peut être fournie par l'un des auxiliaires à courant continu, par exemple), met en court-circuit la sortie continue du redresseur 15. La tension alternative fournie sur la sortie AC est alors pratiquement annulée. Les auxiliaires à courant alternatif ne sont plus alimentés. La diode 25, à l'instar de la diode 20 (figure 2) protège le condensateur 21 et, dans ce cas plus particulièrement évite de le court-circuiter. Dès que la commande Cd est supprimée, le commutateur interrupteur se rebloque et la tension alternative triphasée est rétablie à sa valeur précédente sur la sortie AC. Ainsi, ce module additionnel est installé toutes les fois qu'il est nécessaire de pouvoir arrêter le fonctionnement des auxiliaires à courant alternatif durant une période où ils sont alimentés pour pouvoir fonctionner.

Maintenant, toujours selon l'invention, dans une installation de pompage qui comprend des auxiliaires à courant continu et des auxiliaires à courant alternatif, on prévoira un transformateur 7 associé à une unité selon la figure 2, pour les premiers, puis, en série, un deuxième transformateur 7 et une unité selon la figure 3, pour les seconds. Si l'on doit produire plusieurs sorties d'alimentation en courant continu, on prévoira de même plusieurs ensembles conforme à la figure 2, dont les transformateurs 7 seront également en série. Il en irait de même pour plusieurs sorties de tension alternative.

On notera enfin que la sortie DC de l'unité d'alimentation de la figure 3 peut en outre fournir une tension continue d'environ 500 V, en même temps que la tension AC, ne serait-ce que pour permettre un contrôle très simple de la présence de cette dernière.

Il est bien évident que les descriptions qui précèdent n'ont été fournies qu'à titre d'exemple non limitatif et que les valeurs numériques, notamment, peuvent varier selon l'exemple de mise en oeuvre considéré.

## Revendications

1. Système d'alimentation d'auxiliaires pour station de pompage alimentée à distance, caractérisé en ce qu'il comprend un transformateur (7) dont un enroulement primaire (13), par phase, est connecté en série avec un moteur de pompage (6), et dont un enroulement secondaire (14), par phase, alimente en cascade un redresseur (15) et un limiteur de tension (16) susceptible de dériver du courant fourni en excès par ledit enroulement secondaire ; ledit limiteur de tension (16) comprenant un condensateur (21) connecté en parallèle sur la sortie continue dudit redresseur (15) et des moyens (22, 23) pour comparer la tension de charge dudit condensateur (21) à une tension de référence (E) et pour commander de manière binaire un commutateur (24) en fonction du résultat de la comparaison ; ce commutateur (24) ne pouvant avoir que deux états : un premier état où il dérive un courant continu fourni en excès par ledit redresseur (15), et un second état où il est ouvert ; ledit condensateur (21) maintenant la tension de ladite sortie continue lorsque ledit commutateur dérive ledit courant continu fourni en excès.

2. Système d'alimentation d'auxiliaires pour station de pompage conforme à la revendication 1, caractérisé en ce que lesdits auxilaires sont des auxiliaires à courant continu qui sont connectés à la sortie dudit redresseur (15), en parallèle sur ledit limiteur de tension (16).

3. Système d'alimentation d'auxiliaires pour station de pompage conforme à la revendication 2, caractérisé en ce qu'une diode de découplage (20) est prévue entre ledit commutateur (24) et ledit condensateur (21), afin de préserver la charge dudit condensateur (21).

4. Système d'alimentation d'auxiliaires pour station de pompage conforme à la revendication 1, caractérisé en ce que lesdits auxiliaires sont des auxiliaires à courant alternatif qui sont connectés audit enroulement secondaire (14), par phase, en parallèle sur ledit redresseur (15).

5. Système d'alimentation d'auxiliaires pour station de pompage conforme à la revendication 4, caractérisé en ce que ledit commutateur (24) dérive sur un court-circuit le courant fourni en excès par ledit redresseur (15).

6. Système d'alimentation d'auxiliaires pour station de pompage conforme à la revendication 5, caractérisé en ce que ledit commutateur (24) dérive le courant fourni en excès par ledit redresseur (15) dans une charge résistive (27).

7. Système d'alimentation d'auxiliaires pour station de pompage conforme à la revendication 6, caractérisé en ce que ledit commutateur (24) est précédé d'un commutateur interrupteur (26) permettant de court-circuiter la sortie dudit redresseur (15), une diode de découplage (25) étant prévue entre ce commutateur (26) et ledit commutateur (24) du limiteur de tension (16).

8. Système d'alimentation d'auxiliaires pour station de pompage conforme à la revendication 1, caractérisé en ce que le système d'alimentation, comprend au moins deux transformateurs (7) dont les primaires sont connectés en série pour alimenter respectivement, d'une part, des auxiliaires à courant continu et, d'autre part, des auxiliaires à courant alternatif.

9. Système d'alimentation d'auxiliaires pour station de pompage conforme à la revendication 2, ou 3, caractérisé en ce qu'il comprend un générateur d'alimentation avec des moyens d'alimentation de repos pour maintenir un courant minimal d'alimentation lorsque la station de pompage est à l'arrêt.

10. Système d'alimentation d'auxiliaires pour station de pompage conforme à la revendication 9, caractérisé en ce que ledit générateur comprend des moyens de relèvement d'alimentation de repos fournissant un courant temporairement accru pendant des périodes espacées, lorsque la station de pompage est au repos.

## Patentansprüche

1. Versorgungssystem für die Hilfsstromkreise einer ferngespeisten Pumpstation, **dadurch gekennzeichnet**, dass sie umfasst einen Transformator (7), dessen Hauptwicklung (13) in Phase seriell mit einem Pumpmotor (6) verbunden ist und dessen Sekundärwicklung (14) in Phase als Kaskade einen Gleichrichter (15) und einen Spannungsbegrenzer (16) versorgt, der in der Lage ist, einen Überschussstrom abzuleiten, der von der Sekundärwicklung abgegeben wird; wobei der Spannungsbegrenzer (16) einen Kondensator (21) umfasst, der parallel mit dem Gleichrichter (15) und den Einrichtungen (22, 23) verbunden ist, um die Ladungsspannung des Kondensators (21) mit einer Referenzspannung (E) zu vergleichen und um in binärer Weise einen Kommutator (24) als Funktion des Resultates des Vergleiches zu steuern; wobei der Kommutator (24) lediglich zwei Zustände einnehmen kann: einen ersten Zustand, in dem er einen von dem Gleichrichter (15) abgegebenen Überschussstrom ableitet und einen zweiten Zustand, in dem er offen ist; wobei der Kondensator (21) die Spannung des durchgehenden Ausganges aufrechterhält, während der Kommutator die zur Verfügung gestellte Überschussspannung ableitet.

2. Versorgungssystem für die Hilfsstromkreise einer Pumpstation nach Anspruch 1, dadurch gekennzeichnet, dass die Hilfsstromkreise Gleichstromhilfsstromkreise sind, die mit dem Ausgang des Gleichrichters (15) verbunden sind, parallel an dem Spannungsbegrenzer (16).

3. Versorgungssystem für die Hilfsstromkreise für eine Pumpstation nach Anspruch 2, dadurch gekennzeichnet, dass eine Entkopplungsdiode (20) zwischen dem Kommutator (24) und dem Kondensator (21) vorgesehen ist, um die Ladung des Kondensators (21) zu erhalten.

4. Versorgungssystem für die Hilfsstromkreise für eine Pumpstation gemäß Anspruch 1, dadurch gekennzeichnet, dass die Hilfsstromkreise Wechselstromhilfsstromkreise sind, die mit der Sekundärwicklung (24) in Phase verbunden sind, parallel zu dem Gleichrichter (15).

5. Versorgungssystem für die Hilfsstromkreise für eine Pumpstation gemäß Anspruch 4, dadurch gekennzeichnet, dass der Kommutator (24) über einen Kurzschluss den von dem Gleichrichter (15) zur Verfügung gestellten Überschussstrom ableitet.

6. Versorgungssystem für die Hilfsstromkreise für eine Pumpstation gemäß Anspruch 5, dadurch gekennzeichnet, dass der Kommutator (24) den von dem Gleichrichter (15) zur Verfügung gestellten Überschussstrom in eine Resistivspannung (25) ableitet.

7. Versorgungssystem der Hilfsstromkreise für eine Pumpstation gemäß Anspruch 6, dadurch gekennzeichnet, dass dem Kommutator (24) ein Kommutatorunterbrecher (26) vorausgeht, der es ermöglicht, den Ausgang des Gleichrichters (15) kurz zu schließen, wobei eine Entkopplungsdiode (25) zwischen dem Kommutator (26) und dem Kommutator (24) des Spannungsbegrenzers (16) vorgesehen ist.

8. Versorgungssystem der Hilfsstromkreise für eine Pumpstation gemäß Anspruch 1, dadurch gekennzeichnet, dass das Versorgungssystem zumindest zwei Transformatoren (7) umfasst, deren Primäre, seriell verbunden sind, um jeweils einerseits die Gleichstromhilfsstromkreise versorgen und andererseits die Wechselstromhilfsstromkreise.

9. Versorgungssystem für die Hilfsstromkreise für eine Pumpstation gemäß Anspruch 2 oder 3, dadurch gekennzeichnet, dass es einen Versorgungsgenerator mit Ruheversorgungseinrichtungen umfasst, um einen minimalen Versorgungsstrom aufrechzuerhalten, wenn die Pumpstation angehalten ist.

10. Versorgungssystem der Hilfsstromkreise für eine Pumpstation gemäß Anspruch 9, dadurch gekennzeichnet, dass der Generator Einrichtungen zur Anhebung der Ruheversorgung umfasst, die einen Strom zur Verfügung stellen, der während voneinander beabstandeter Zeiträume zeitweilig angehoben wird, wenn die Pumpstation in Ruhe ist.

## Claims

1. A system for powering auxiliary equipment in a remotely-powered pumping station, the system being characterized in that it comprises a transformer (7) having one primary winding (13) per phase connected in series with a pumping motor (6), and one secondary winding (14) per phase feeding in cascade a rectifier (15) and a voltage limiter (16) suitable for diverting excess current supplied by said secondary winding; said voltage limiter (16) comprising a capacitor (21) connected in parallel with the DC output of said rectifier (15), and means (22, 23) for comparing the charged voltage of said capacitor (21) with a reference voltage (E), and for controlling in binary manner a switch (24) as a function of the result of the comparison, said switch (24) having only two states: a first state in which it diverts excess direct current supplied by said rectifier (15), and a second state in which it is open; said capacitor (21) maintaining the voltage of said DC output when said switch diverts said excess direct current.

2. A system for powering auxiliary equipment at a pumping station, according to claim 1, characterized in that said auxiliary equipment is DC equipment connected to the output of said rectifier (15) in parallel with said voltage limiter (16).

3. A system for powering auxiliary equipment at a pumping station, according to claim 2, characterized in that a decoupling diode (20) is provided between said switch (24) and said capacitor (21), in order to preserve the charge on said capacitor (21).

4. A system for powering auxiliary equipment at a pumping station, according to claim 1, characterized in that said auxiliary equipment is AC equipment connected to the phases of said secondary winding (14) in parallel with said rectifier (15).

5. A system for powering auxiliary equipment at a pumping station, according to claim 4, characterized in that said switch (24) diverts the excess current supplied by said rectifier (15) to a short circuit.

6. A system for powering auxiliary equipment at a pumping station, according to claim 5, characterized in that said switch (24) diverts the excess current supplied by said rectifier (15) into a resistive load (27).

7. A system for powering auxiliary equipment at a pumping station, according to claim 6, characterized in that switch (24) is preceded by an interrupter switch (26) enabling the output of said rectifier (15) to be short circuited, a decoupling diode (25) being provided between said interrupter switch (26) and said switch (24) of the voltage limiter (16).

8. A system for powering auxiliary equipment at a pumping station, according to claim 1, characterized in that the system comprises at least two transformers (7), their primaries being connected in series for powering respectively firstly DC auxiliary equipment, and secondly AC auxiliary equipment.

9. A system for powering auxiliary equipment at a pumping station, according to claim 2 or 3, characterized in that it includes a power supply generator including means for supplying power at rest to maintain a minimum power supply current when the pumping station is stopped.

10. A system for powering auxiliary equipment at a pumping station, according to claim 9, characterized in that said generator includes means that increase the rest power supply current to deliver higher current temporarily during spaced-apart periods, while the pumping station is at rest.
